# EUROPEAN PATENT APPLICATION

(11) **EP 3 166 063 A1**
(43) Date of publication of application: **10.05.2017**
(21) Application number: 15193554.1
(22) Date of filing: 06.11.2015
(51) Int. Cl.: G06Q 30/02, G06Q 20/32

(54) **HEATMAP VISUALISATION OF EVENT DATA**

(71) Applicant: Mastercard International Incorporated, Purchase NY 10577 (US)
(72) Inventor: OLIVA, Michael Charles, 3010 Kessel-Lo (BE); CALVOSA, Mattia, Brescia (IT); CELAC, Mariana, 1050 Brussels (BE); BARRY, Mamadou, Dublin, 15 (IE); COBURN, Robin, County Dublin (IE); GRIFFIN, Conor, Dublin, 15 (IE)
(74) Representative: Lawrence, Richard Anthony

(57) **Abstract**

The information service is adapted to receive location and time data from a user computing device and extract data relevant to the said location and time from one or more event databases. The collected event data is then used to produce opportunities data, which is sent to a user for displaying on a geographical map at the user's computing device. Event data suitably comprises transaction data. A suitable computer program and user mobile device for use with this system are also provided.

## Description

### Field of Disclosure

This disclosure relates generally to visualisation of event data. In embodiments, it relates to visualisation of transaction data on a map and to methods and apparatus to use this data.

### Background of Disclosure

Payment cards such as credit cards and debit cards are very widely used for all forms of financial transaction. Card transactions data represent a large amount of commercial activity information that can be characterised both geographically and demographically.

### Summary of Disclosure

In a first aspect, the disclosure provides an information service system for providing information relating to events, wherein the information service comprises a computing system with processing apparatus, network communication to send and receive information from other parties, memory and access to one or more event databases, wherein the information service is adapted to: receive location and time data from a user computing device; extract data relevant to the said location and time from the one or more event databases; produce opportunities data based on the collected event data; provide the opportunities data to a user for displaying on a geographical map at the user's computing device. The event data may comprise transaction data, or live transaction data, and opportunities data may comprise intensity of transaction activity associated with a time and location.

When visiting an unknown city or neighbourhood, users often rely on resources that provide information as to locations or activities of particular interest to a user, such as e.g. popular restaurants, events, shopping areas, etc.

It would be desirable to have a platform that allowed users to obtain information about current or forecasted activity in a city or neighbourhood so as to identify areas of relevance- in particular, the approach described enables a user to browse a map for areas of high transaction activity.

Additionally, payment card providers commonly offer loyalty and advantages programmes through which users can get special offers and advantages at certain locations. Users are more likely to take advantage of such offers if they are aware of their presence in the vicinity of a location of interest. Therefore, it would be particularly advantageous to be able to display transaction activity information alongside information pertaining to opportunities of interest to a user, such as e.g. events, special offers, locations of interest, etc.

In embodiments, opportunities data may additionally comprises data about marketing offers, entertainment options, fidelity programme advantages or data from social media associated with the location.

In some embodiments of the invention, producing opportunities data from event data may involve selection and/or aggregation of event data according to predetermined rules. Producing opportunities data from event data may instead or in addition involve predicting future event data.

In embodiments, opportunities may comprise locations where transaction activity according to predetermined criteria is recorded in the event data. Suitable criteria may be defined based on an absolute or relative level of transaction intensity and/or information associated with the parties involved in the transactions.

In embodiments, displaying the data involves displaying a heatmap of transaction activity.

Advantageously, determining a location and time and displaying the data may be performed by a user's computing device, preferably a mobile phone, personal computer or tablet.

According to aspects of the disclosure, determining a location and time may involve a user selecting a location and/or time and/or automatically providing a location and/or time via one or more of GPS, cellular telephony cell data, location wireless network data or parameters associated with a user.

In a second aspect, the disclosure provides a method for a user mobile device to display opportunities on a map, wherein the mobile device is a mobile computing device or a mobile handset, the method comprising: the user mobile device obtaining location and time data; the user device communicating with a data service to obtain opportunities data relevant to the location and time; the user device displaying opportunities data on a geographical map.

In some embodiments of the method of the invention, the opportunities data comprises or is derived from event data. In some embodiments, event data comprises transaction data. Advantageously, the event data may comprise live transaction data.

In some embodiments, opportunities data may comprise intensity of transaction activity associated with a time and location. Advantageously, the opportunities data may additionally comprise data about marketing offers, entertainment options, fidelity programme advantages or data from social media associated with the location.

In embodiments of the method above, producing opportunities data from event data may involve selecting and/or aggregating event data according to predetermined rules. Optionally, producing opportunities data from event data may involve predicting future event data.

In some embodiments, opportunities may comprise locations where transaction activity according to predetermined criteria is recorded in the event data. Advantageously, the criteria may be defined based on an absolute or relative level of transaction intensity and/or information associated with the parties involved in the transactions.

In some embodiments, displaying the data involves displaying a heatmap of transaction activity.

In embodiments, obtaining a location and time and displaying the data may be performed by a user's computing device, preferably a mobile phone, personal computer or tablet. Advantageously, determining a location and time may involve a user selecting a location and/or time. In some advantageous embodiments, alone or in combination with the above, the location and/or time may be automatically provided by one or more of GPS, cellular telephony cell data, location wireless network data or parameters associated with a user.

In a third aspect, the disclosure provides a computer program stored on a storage medium, wherein the computer program when stored in a memory of a user mobile device and running on a processor of the user mobile device causes the user mobile device to perform the method described above.

In a fourth aspect, the disclosure provides user mobile device comprising a processor and a memory and adapted to perform the method described above.

### Brief Description of Figures

Embodiments of the disclosure will now be described, by way of example, with reference to the accompanying Figures, of which:
Figure 1 shows schematically relevant parts of a representative transaction and opportunities visualisation system suitable for implementing an embodiment of the disclosure;
Figures 2a and 2b illustrate schematically relevant functions of a user mobile device and a data services server, all suitable for implementing an embodiment of the disclosure;
Figure 3a, 3b and 3c show a mobile phone user interface for a data visualisation application suitable for implementing an embodiment of the disclosure;
Figure 4 describes a method according to a broad aspect of the disclosure;
Figure 5 illustrates a user experience according to one aspect of the disclosure;
Figure 6 illustrates steps performed by a mobile device application in an embodiment of the disclosure;
Figure 7 illustrates steps performed by a data services server according to an aspect of the disclosure.

### Description of Specific Embodiments

Specific embodiments of the disclosure will be described below with reference to the Figures.

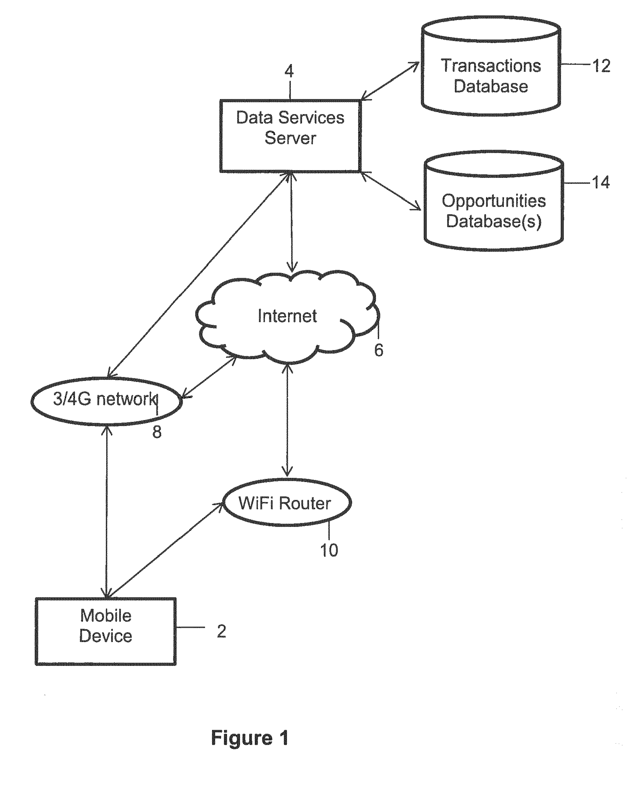

Figure 1 shows schematically relevant parts of a representative transaction and opportunities visualisation system suitable for implementing an embodiment of the disclosure.

A user (not shown) is provided with an electronic device - this may be for example a personal computer, but in particular embodiments it may be a mobile device 2 (such as a mobile phone, tablet, laptop, or other mobile computing device). These devices typically have processors and memories for storing information including firmware and applications run by the respective processors. The mobile device 2 may comprise an antenna and associated hardware and software to allow communications with a data services server 4 via the internet 6 via a local WiFi router 10, a 3G/4G telecommunications network 8, any combination of the above or any wireless communications protocol.

The data services server 4 (while represented here as a single server, this may of course comprise any appropriate computer system or set of computer systems) is shown as interacting with both the user mobile device 2 and a transactions database 12. The transactions database 12 contains live transaction data such as the type of data already available to credit or debit card providers. Transaction data will typically be associated with a location (merchant identifier) and information about the cardholder (via the card provider's customer information data). The transaction database 12 is used to represent a repository of data pertaining to transactions but may in fact be implemented as a collection of databases, such as e.g. a database containing transaction information, a database containing cardholder information and a database containing merchant information. In some embodiments, the data services server also interacts with one or more opportunities databases 14.

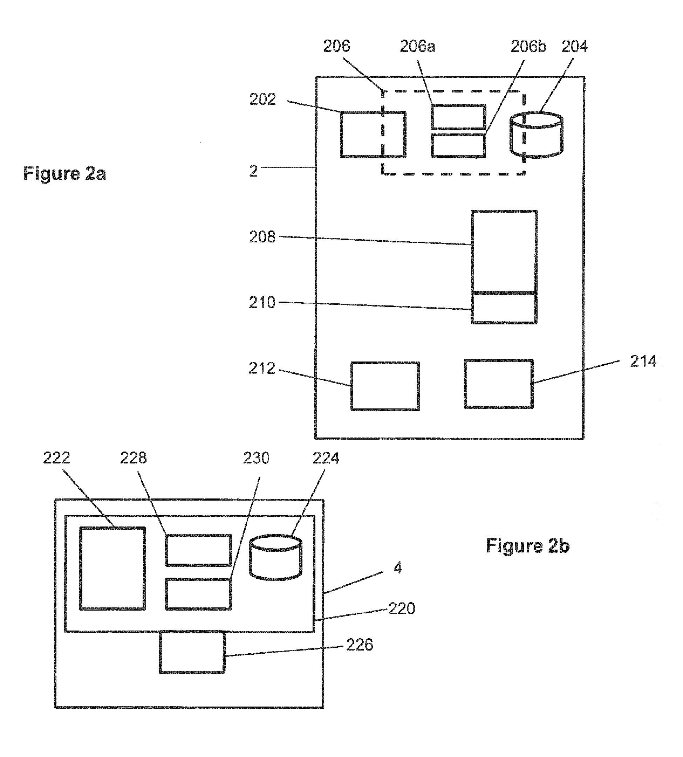

Figures 2a and 2b illustrate schematically relevant functions of a user mobile device and a data services server, all suitable for implementing an embodiment of the disclosure.

Figure 2a shows a mobile device 2 such as a mobile phone, though it should be noted that any other portable computing apparatus such as a laptop, notebook or tablet computer, or even a fixed apparatus such as a desktop computer, can be used as computing apparatus in embodiments of the disclosure. The mobile device 2 is a client interacting with the data services server 4.

The mobile device comprises a processor 202 and a memory 204, such that the memory stores and the processor will subsequently run applications (shown generally as application space 206) 206 such as a visualisation application 206a and a mapping application 206b. Other applications such as social networking applications, banking applications etc. may also be present. The mobile device has a user interface comprising a display 208 and a touchscreen 210 (or other input device) and associated drivers to allow a user to enter data into and view information from the applications 206. In embodiments where the mobile device 2 is a mobile phone, it also has a cellular telecommunications capability, including a wireless communication element 212 providing the ability to connect to a cellular communications network.

The mobile device 2 may, instead or in addition to the wireless communication element 212, include a local networking element 214, in order to establish a short range wireless network. While a network connection is needed to enable communication between the computing device and the data services server, this need not involve cellular telecommunications. For example, the computing device may be a tablet computer without cellular telecommunications capability but capable of making a local wireless network connection, and so a connection to the data services server through the public internet. Further, the device may be a fixed apparatus such as a desktop computer, establishing a wired or wireless connection to the data services server 4 via the internet.

Figure 2b describes elements of the data services server 4. This is shown as comprising a server 220 with processor 222 and memory 224, with associated communications functionality 226. The communications functionality may include networking capability allowing communication with the mobile device 2. The processor 222 is a representation of processing capability and may in practice be provided by several processors. The server provides at least a data management application 228 stored in the memory 224 and run on the processor 222, and a search engine 230 interacting with the one or more databases 12, 14. In some embodiments, the memory 224 is also storing the transactions database 12, and/or one or more opportunities databases 14 (other features, such as a user database, are not shown explicitly here as they may be implemented by conventional means and do not need to be discussed further to explain the elements of the present disclosure).

The data management application 228 receives queries from the mobile device (produced by the visualisation application 206a), and interacts with the search engine 230 to obtain the required data (transactions and, optionally, relevant opportunities) from the databases 12, 14. The data management application 228 collects and processes the data and serves it to the mobile device 2 for display by the visualisation application 206a, possibly in connection with the mapping application 206b.

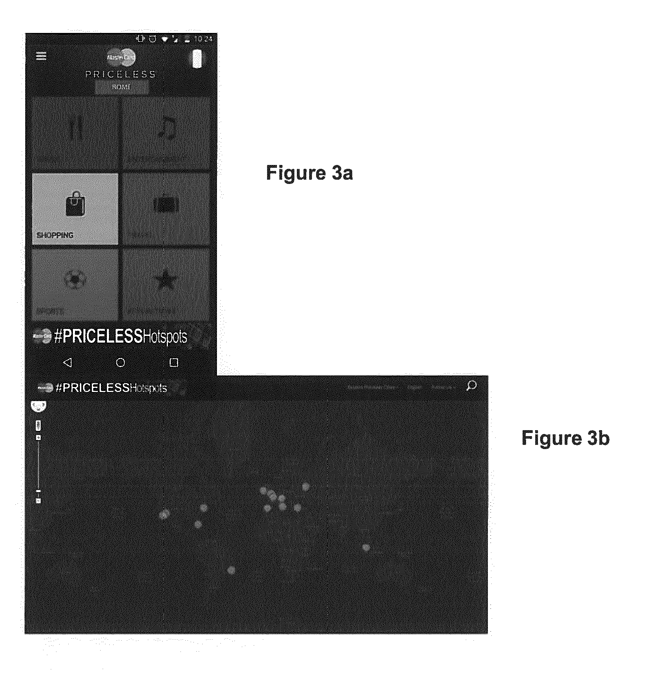

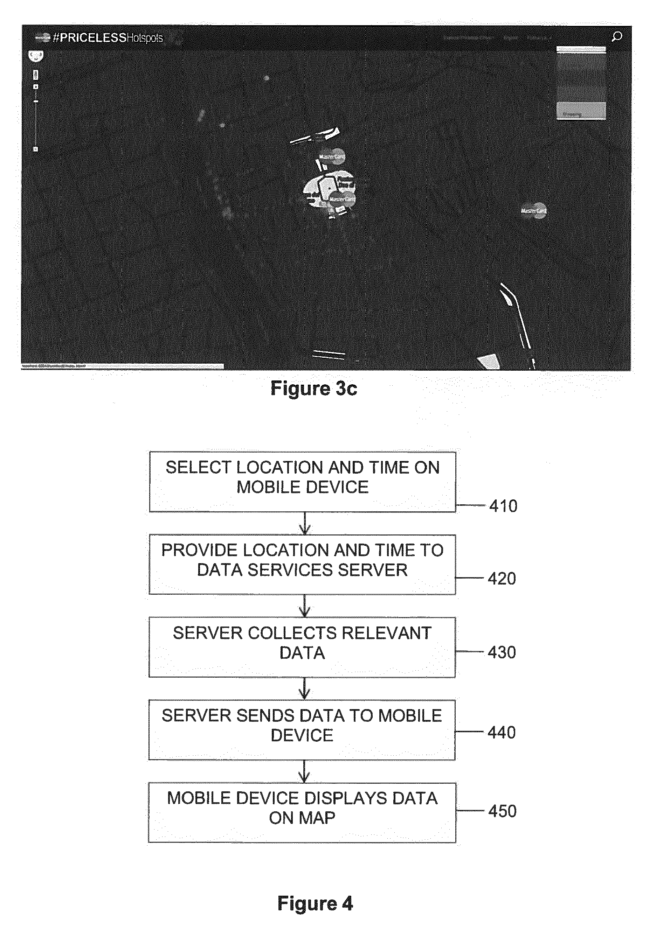

Figure 3 shows a mobile device user interface for a visualisation application 206a.The user interface shown allows searching for specific destinations (e.g. see Figure 3b where destinations where the service may be available are displayed as dots) or items (e.g. specific categories of opportunities or transactions, see Figure 3a). The user interface then displays (at least) transaction information (of particular types if specific categories of transactions are selected) on a map. Displayed on Figure 3c are small dots representing locations of intense transaction activity, and symbols indicating specific opportunities such as special offers or advantages forming part of a loyalty programme or marketing partnership with e.g. retail or entertainment partners. Intensity of transaction activity may be displayed as on Figure 3c as dots representing locations of higher than threshold transaction activity. In other embodiments (not shown), transaction activity may be shown as an overlaid heatmap of zones associated with different levels of transaction activity. For example, a heatmap may be obtained by defining zones on a map, computing the number of relevant transactions in each zone and displaying the zones with an overlaid colour scale reflecting the relative intensity of transactions. The skilled person would understand that the colour spectrum, intensity range and behaviour of the visualisation on zooming in and/or out may be dependent on the data to be visualised, and in particular on the transaction data displayed. Zones on a map may be defined based on a regular or irregular grid of fixed or variable granularity, possibly in combination with a smoothing algorithm, or based on a pre-defined structure e.g. matching the configuration of a street map. A colour scale may be pre-defined or may be computed on the fly based on the information to be displayed on a current view. In some embodiments, the visualisation scheme (colour of the background, size of items displayed, detail displayed, etc.) may be adapted to reflect preferences of a user, or on external parameters such as time of day/night. In some embodiments, the colour of the background and the colour scale used for data display may be different depending on whether the visualisation relates to or is produced at night time or day time.

Other types of data that may be displayed on the map may include events data from an events database or any specified source of events information (e.g. partner venues, etc.), data extracted from social media (such as e.g. popular venues, events, etc.), or any type of information that can be geographically characterised and represents a social, cultural, entertainment, restaurants, practical (e.g. location of ATMs, stations, public facilities etc.) or commercial opportunities for a user. This transaction and opportunities information may readily be combined with the mapping solution 206b native to the platform. In some embodiments, partners, preferred merchants or subscribers to the scheme may be able to define the data that they want displayed at a location associated with them. For example, they may be able to define one or more of an icon, offers, deals, specials, announcements or any other type of commercially relevant information. Such information may be displayed by default or may be displayed upon an action of the user, such as e.g. tapping the icon or the name of the merchant.

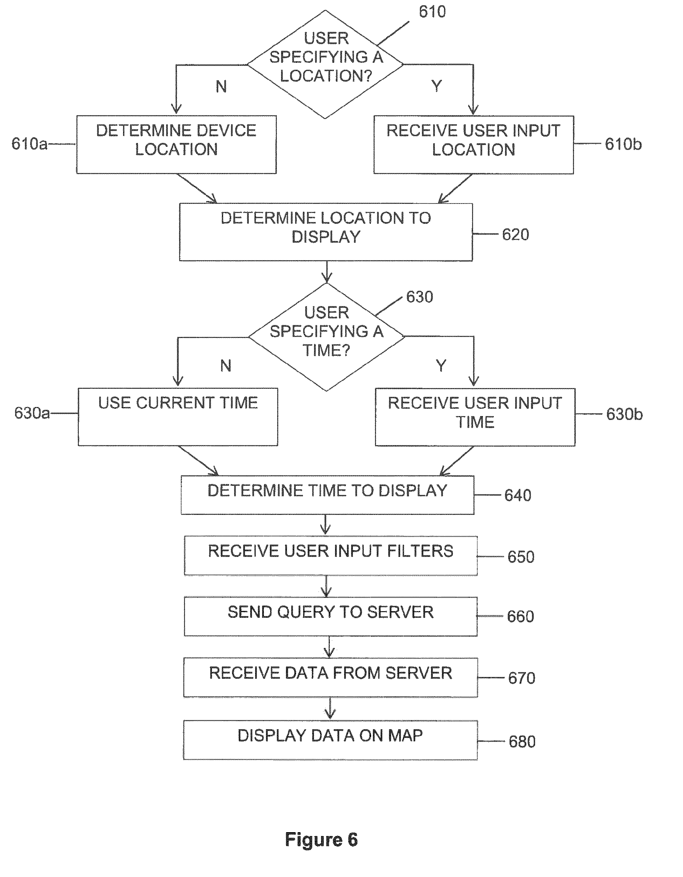

Figure 4 describes a method according to a broad aspect of the disclosure. The method enables acquisition and visualisation of data pertaining to areas of intense activity. Firstly, a user selects 410 a location and optionally a time on a mobile device 2 (actively by searching for a location and time or passively by allowing the visualisation application 206a to determine the current time and/or location, see Figure 6). The mobile device 2 then provides 420 the location and time data to the data services server 4. Optionally, a user may also select filters in order to determine the type and/or source of data that they wish to visualise.

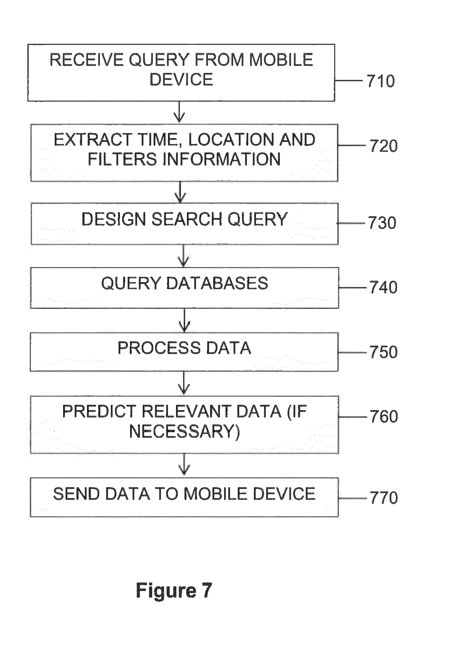

The server 4 then collects 430 the relevant data (by querying databases 12, 14 and optionally processing the resulting data, see Figure 7) and sends 440 the data to the mobile device 2. Finally, the mobile device 2 displays 450 the data on a map, via the visualisation application 206a possibly in combination with the mapping application 206b.

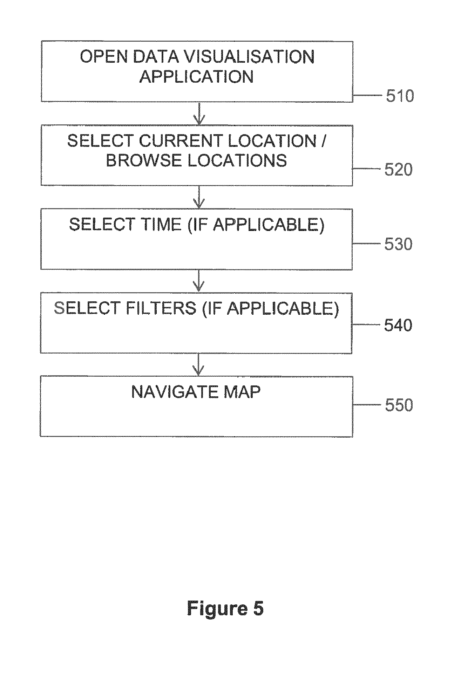

Figure 5 illustrates a user experience according to one aspect of the disclosure. Firstly, a user opens 510 the data visualisation application 206a on a mobile device 2. The data visualisation application may be an application that runs on the mobile device or a web application that runs in any browser on any computing device. In some embodiments, the application may be a plugin that works in combination with e.g. a mapping application, in which case opening the application may in practice be done by enabling the plugin. The user then selects 520 a location (e.g. by searching or navigating a map) or allows the data visualisation application to select the current location as default location. For example, the mobile device 2 may have a built-in location tracking mechanism - typically using one or more of GPS, cell identification and triangulation in a cellular network, and WiFi network location, or the default location may be provided as a parameter of the device or of the application (e.g. if the device is a desktop computer). In some embodiments, the user may then select 530 a time frame of interest, or allow the application to use the current time as default time. For example, a user may select notional times such as "tonight", "tomorrow" or "Saturday night", or select specific dates and times. In some embodiments, the current time is always used. In preferred embodiments, the current time is used as default and a user may specify a time/date to display.

A user may, before or after steps 520, 530 and 550, be allowed to select 540 filters in order to determine the type of information to be displayed on the map. In specific embodiments, users may be able to apply filters on the transactions data, on the opportunities data or both. Some filters may be automatically preselected based on e.g. opportunities that are available to or tailored to a user based on e.g. a user profile or history. Filters that may be applied to transaction data may include the category of merchants where the transactions occur (e.g. restaurants, shops, leisure centres etc.), the category of card holders who made the transactions (e.g. age range, registered location, etc.). In particular embodiments, a user may be able to apply a filter to select "hidden gems" or "local secrets" based on concentrated transaction activity by local rather than foreign or more distantly registered card holders. Filters that may be applied on the opportunities data may include the category of opportunities (e.g. restaurants, concerts, shops, etc.), the nature of the opportunity (e.g. special advantages, events, etc.) or the source of the opportunity (e.g. specific events databases, social media, partnership programmes, loyalty programmes etc.). In particular embodiments, a user may be able to select a filter to require visualisation of the top x locations in a particular category (e.g. the top 10 bars) in an area (where the area may be an entire city). In preferred embodiments, top locations may be based on transaction activity. Finally, a user may then navigate the map resulting from overlay of the above information on a geographical map.

Figure 6 illustrates steps performed by a mobile device application in an embodiment of the disclosure. This requires at least an intermittent connection of some kind between the mobile device 2 and the data services server 4. The application 206a determines 610 whether a user has input 610b a location (either by searching for a location or by navigating a map on a screen) or whether to determine the location 620 based on the device location or default location 610a. The application may also determine 630 whether the user has input 630b a date/time or whether the current time should be used 630a as the time to determine 640 the relevant information to display. Before or after the above, the application also optionally receives 650 user input (or automatically set based on e.g. customer information such as loyalty rewards available, transactions history etc.) preferences on filters to be applied to the data that is to be displayed. The application then sends 660 a query to the server 4, containing the location, time and filters information, if applicable.

Finally, the application receives 670 and displays 680 data on a map. In some embodiments, the map information is contained in or accessed by the data visualisation application 206a. In other embodiments, the data visualisation application may interact with or be a plugin that works in coordination with a separate (native or non-native) mapping application 206b. A user may then navigate the resulting map. Modification of the displayed portion of map, time or filters setting may require producing a new query and refreshing the map. Regular updates may be requested by the application in order to maintain an accurate "real-time" representation of the displayed information.

In some embodiments, the application may also communicate with other applications present on the device (not shown), such as e.g. social media applications, travel guide applications, banking applications, traffic or transport applications etc. in order to extract data to display on the map. In some embodiments, social media posts that are linked to a location on the map displayed or to a programme associated with the application may be displayed to a user. For example, posts on Twitter that have a tag linked to a loyalty programme supported by the application may be automatically displayed. Such tags may also be location (e.g. city) specific, if for example that is a feature of the programme. An example of such programmes that may be easily combined with the present invention is the MasterCard Priceless programme, where opportunities for MasterCard customers are available in a series of cities. In this example, any poster that would bear a tag such as #pricelessCityx would be automatically displayed to a user of the application when visualising data relating to City x. In some embodiments, travel reviews may be displayed on the map, such as e.g. by interactions with applications such as TripAdvisor. In some embodiments, information from booking applications may be integrated in the visualisation, such as e.g. restaurant booking, hotel bookings etc. In convenient embodiments, communication between the application and selected (e.g. partner) booking applications may be implemented such that a user can book e.g. a service without leaving the visualisation application, e.g. by opening a pop up window. As mentioned above, in some embodiments the application may be a web application that may be accessed from any browser on any type of computing device, or a mobile device application, or a combination of both.

Figure 7 illustrates steps performed by a data services server according to an aspect of the disclosure. The server 4 receives 710 a query over a data network, where the query contains the location, time (if specified) and optionally any other information based on which data should be obtained. The data management application 228 extracts 720 the relevant information and designs 730 one or more search queries for one or more databases 12, 14. The queries are passed to the search engine 230 which queries 740 the databases 12, 14. As mentioned above, depending on the particular implementation of the databases 12, 14, multiple queries may in fact be required to obtain relevant information. For example, a merchant information database may be queried to obtain merchant IDs associated with a given area, based on which a transactions database may be queried to obtain all associated transactions. Customer ID information associated with the extracted transaction may subsequently be used to query a customer information database in order to extract relevant information about the cardholder party to the transaction (e.g. age, gender, domicile, etc.).

Depending on the format of data that is extracted from the databases, the application 228 may need to process the data. For example, in the case of transaction information, some processing may be required to ensure anonymity of the data. In particular embodiments, this may involve aggregating the data from multiple transactions and/or close-by locations to ensure that single transactions and/or merchants cannot be identified. In some embodiments, merchants may be able to opt in for the transaction data associated with them to be visualised individually.

In some embodiments, the time specified is the current time and transactions/opportunities within a window around the current time are requested. In other embodiments, the time specified is a future time and transactions at similar relevant times are extracted, as well as opportunities relevant at the specified time. In the latter case, the data management application 228 may use data extracted from the database 12 to predict 760 the transaction activity at the specified time. For example, if the specified time is "Saturday evening", the data management application 228 may query the transactions database 12 for the data pertaining to x previous Saturdays and produce an estimate based on these. Estimates may be obtained for example based on an average, smoothed average, filtered average over, or median of the relevant data collected, or derived from any other relevant statistical metric associated with this data. Such data may allow a user to e.g. determine which restaurants are particularly busy on a Saturday evening, which concert venue typically hosts events, which shops are likely to be quiet, etc. In some embodiments, as mentioned above, the data may be filtered prior to analysis, in order to focus on e.g. on subcategories of users. For example, the data may be filtered to exclude data pertaining to transactions performed by users registered abroad or to restrict to users registered in the city being visualised. The server 4 finally sends 770 the data to the mobile device.

In some embodiments, the application 206a may locally perform any or all of steps 720, 730, 740, 750 and 760. In particular embodiments, the application 206a may interact with plugins via APIs in order to obtain data to be displayed. For example, the application may interact with a social media application (e.g. Twitter, Facebook, etc.) in order to extract relevant information, based on e.g. location/time attributes or specific tags (such as e.g. tags marking specific posts as relating to a particular event or loyalty programme offer). For example, the application may extract information such as locations visited by social media contacts, locations associated with client information, history, correspondence or calendar notifications.

As the person skilled in the art will appreciate, modifications and variations to the above embodiments may be provided, and further embodiments may be developed, without departing from the spirit and scope of the disclosure. Reference to standards and proprietary technologies are provided for the purpose of describing effective implementations, and do not limit the scope of the disclosure.

## Claims

1. An information service system for providing information relating to events, wherein the information service comprises a computing system (4) with processing apparatus (222), network communication (226) to send and receive information from other parties, memory (224) and access to one or more event databases (12, 14), wherein the information service is adapted to:
receive (710) location and time data from a user computing device (2);
extract (720, 730, 740) data relevant to the said location and time from the one or more event databases (12, 14);
produce (750) opportunities data based on the collected event data;
provide (770) the opportunities data to a user for displaying (680) in the form of a geographical map on a display (208) of the user's computing device (2).

2. The information system of claim 1, wherein the event data comprises transaction data.

3. The information system of claim 2, wherein the event data comprises live transaction data.

4. The information system of any preceding claim, wherein opportunities data comprise intensity of transaction activity associated with a time and location.

5. The information system of claim 4, wherein the opportunities data additionally comprises data about marketing offers, entertainment options, fidelity programme advantages or data from social media associated with the location.

6. The information system of any preceding claim, wherein producing (750) opportunities data from event data involves selection and/or aggregation of event data according to predetermined rules.

7. The information system of claim 6, wherein producing (750) opportunities data from event data involves predicting (760) future event data.

8. The information system of any of claims 2 to 7, wherein opportunities comprise locations where transaction activity according to predetermined criteria is recorded in the event data.

9. The information system of claim 8, wherein the criteria are defined based on an absolute or relative level of transaction intensity and/or information associated with the parties involved in the transactions.

10. A method for a user mobile device (2) to display (680) opportunities on a map, wherein the mobile device (2) is a mobile computing device or a mobile handset, the method comprising:
the user mobile device obtaining (610, 620, 630, 640) location and time data;
the user device communicating (630, 670) with a data service (4) to obtain opportunities data relevant to the location and time;
the user device displaying (680) opportunities data on a geographical map.

11. The method of claim 10, wherein displaying (680) the data involves displaying a heatmap of transaction activity.

12. The method of claims 10 or 11, wherein obtaining (610, 620, 630, 640) a location and time and displaying (680) the data is performed by a user's computing device, preferably a mobile phone, personal computer or tablet.

13. The method of any of claims 10 to 12, wherein determining a location and time involves a user selecting (610b, 630b) a location and/or time.

14. The method of any of claims 10 to 12, wherein the location and/or time is automatically provided (610a, 630a) by one or more of GPS, cellular telephony cell data, location wireless network data or parameters associated with a user.

15. A user mobile device (2) comprising a processor (202) and a memory (204) and adapted to perform the method of any of claims 11 to 14.
